# EUROPEAN PATENT SPECIFICATION

(11) **EP 4 201 722 B1**
(45) Date of publication and mention of the grant of the patent: **11.06.2025**
(21) Application number: 22207292.8
(22) Date of filing: 14.11.2022
(51) Int. Cl.: B60K 6/387, B60K 6/48, B60W 10/02, B60W 10/06, B60W 10/08, B60W 10/26, B60W 20/11, B60W 20/12, B60W 20/14, B60W 20/16, B60W 20/20, B60W 20/40, B60W 40/02, B60W 40/076, B60W 50/00, B60W 40/10

(54) **CONTROL DEVICE OF HYBRID VEHICLE**
STEUERUNGSVORRICHTUNG FÜR EIN HYBRIDFAHRZEUG
DISPOSITIF DE COMMANDE DE VÉHICULE HYBRIDE

(30) Priority: 27.12.2021 JP 2021213151
(43) Date of publication of application: 28.06.2023
(73) Proprietor: Suzuki Motor Corporation, Hamamatsu-shi, Shizuoka 432-8611 (JP)
(72) Inventor: KITA, Takehito, Hamamatsu-shi, 432-8611 (JP)
(74) Representative: Haseltine Lake Kempner LLP

(56) References cited:
- JP-A- 2010 137 605
- JP-A- 2013 001 214
- JP-A- 2016 008 517
- JP-A- 2019 123 330

## Description

### [Technical Field]

The present invention relates to a control device of a hybrid vehicle.

### [Background Art]

There is known from Patent Literature 1 a hybrid vehicle with an engine and a motor as driving sources, in which a timing at which an engine operation is needed is predicted to thereby start, prior to the timing, an engine and complete catalyst warm-up.

The hybrid vehicle described in Patent Literature 1 is configured such that, in a case where an EV travelable distance calculated based on SOC (state of charge) of a battery is longer than a travel distance to a destination point acquired from a navigation device, an engine start for catalyst warm-up is prohibited due to an arrival to the destination point using a driving force from only the motor. Additionally, the hybrid vehicle described in Patent Literature 1 is configured such that, if the engine start is required even when the catalyst warm-up is prohibited, the prohibition is released. Due thereto, in the hybrid vehicle, it is possible to properly warm-up a catalyst converter when the catalyst warm-up is needed.

### [Citation List]

### [Patent Literature]

[Patent Literature 1] JP 2008-120333 A; JP2010137605 relates to a hybrid vehicle and a control method thereof; JP2013001214 relates to a control device for a hybrid vehicle equipped with an engine having a catalyst for purifying exhaust gas in an exhaust system, and a motor for driving driving wheels by at least power supply from a battery; JP2016008517 relates to a control device for a hybrid vehicle mounted on a hybrid vehicle including an engine having a catalyst in an exhaust system while intermittently repeating driving and stopping, and performing catalyst warm-up when the catalyst temperature falls below a lower limit temperature while the engine is stopped;
JP2019123330 relates to a vehicle control system, a vehicle control method, and a program.

### [Summary of Invention]

### [Technical Problem]

However, in the hybrid vehicle described in Patent Literature 1, in a case where the engine is started in response to a rapid increase in a driver required torque during EV traveling to the destination point, the prohibition of the catalyst warm-up is released. For this reason, even if, thereafter, the driver required torque decreases to thereby render a driving force from the engine unnecessary, an engine operation for the catalyst warm-up may be uniformly continued. Hence, in the hybrid vehicle, there is a possibility that fuel efficiency becomes worse due to unnecessary catalyst warm-up.

Thus, an object of the present invention is to provide a control device of a hybrid vehicle capable of avoiding an unnecessary catalyst warm-up to thereby improve a fuel efficiency performance.

### [Solution to Problem]

According to an aspect of the present invention, there is provided a control device of a hybrid vehicle with an EV mode and an HEV mode, the hybrid vehicle including: an engine and a motor as driving sources; and a catalyst to purify an exhaust gas from the engine, the EV mode allowing the hybrid vehicle to travel, with the engine stopped, with a motor torque of the motor, the HEV mode allowing the hybrid vehicle to travel with an engine torque of the engine and the motor torque, the control device including: an acquisition unit to acquire a traveling route from a current point to a destination point; and a control unit to perform a catalyst warm-up control, a switching control, and a calculation, the catalyst warm-up control being of operating the engine to warm-up the catalyst, the switching control being of switching between the EV mode and the HEV mode on conditions therefor based on a driver required torque, the calculation being of calculating a start prediction point on the acquired traveling route, at which the engine is predicted to be started for switching to the HEV mode, and an arrival period of time for which the hybrid vehicle is predicted to travel from the current point to the start prediction point, wherein while the engine is operated on one of the conditions for switching to the HEV mode, the control unit: calculates a warm-up completion period of time for which catalyst temperature rises to a warm-up completion temperature when the catalyst warm-up control is performed, and a catalyst performance maintaining period of time for which the catalyst temperature of the warm-up completion temperature drops to, with the engine stopped, a lower limit temperature down to which an exhaust gas purification performance is maintained, and a catalyst warm-up efficient period of time which is the total of the warm-up completion period and the catalyst performance maintaining period; and prohibits the catalyst warm-up control from being performed if an other condition for switching to the EV mode is established when the calculated arrival period is equal to or longer than the calculated catalyst warm-up efficient period.

### [Advantageous Effect of Invention]

According to the present invention, it is possible to avoid an unnecessary catalyst warm-up to thereby improve a fuel efficiency performance.

### [Brief Description of Drawings]

Fig. 1 is a diagram of a vehicle mounted with a control device according to an embodiment of the present invention.
Fig. 2 is a flow chart showing operations of the control device.
Fig. 3 is a time chart showing an example of a status transition in the vehicle when a predicted period of time for arrival at an engine start in response to an increase in a driver required torque is relatively long.
Fig. 4 is a time chart showing an example of a status transition in the vehicle when a predicted period of time for arrival at an engine start in response to an increase in a driver required torque is relatively short.

### [Description of Embodiment]

A control device according to an embodiment of the present invention is mounted on a hybrid vehicle with an EV mode and an HEV mode, the hybrid vehicle including: an engine and a motor as driving sources; and a catalyst to purify an exhaust gas from the engine, the EV mode allowing the hybrid vehicle to travel, with the engine stopped, with a motor torque of the motor, the HEV mode allowing the hybrid vehicle to travel with an engine torque of the engine and the motor torque, the control device including: an acquisition unit to acquire a traveling route from a current point to a destination point; and a control unit to perform a catalyst warm-up control, a switching control, and a calculation, the catalyst warm-up control being of operating the engine to warm-up the catalyst, the switching control being of switching between the EV mode and the HEV mode on conditions therefor based on a driver required torque, the calculation being of calculating a start prediction point on the acquired traveling route, at which the engine is predicted to be started for switching to the HEV mode, and an arrival period of time for which the hybrid vehicle is predicted to travel from the current point to the start prediction point, wherein while the engine is operated on one of the conditions for switching to the HEV mode, the control unit: calculates a warm-up completion period of time for which catalyst temperature rises to a warm-up completion temperature when the catalyst warm-up control is performed, and a catalyst performance maintaining period of time for which the catalyst temperature of the warm-up completion temperature drops to, with the engine stopped, a lower limit temperature down to which an exhaust gas purification performance is maintained, and a catalyst warm-up efficient period of time which is the total of the warm-up completion period and the catalyst performance maintaining period; and prohibits the catalyst warm-up control from being performed if an other condition for switching to the EV mode is established when the calculated arrival period is equal to or longer than the calculated catalyst warm-up efficient period.

### [Embodiment]

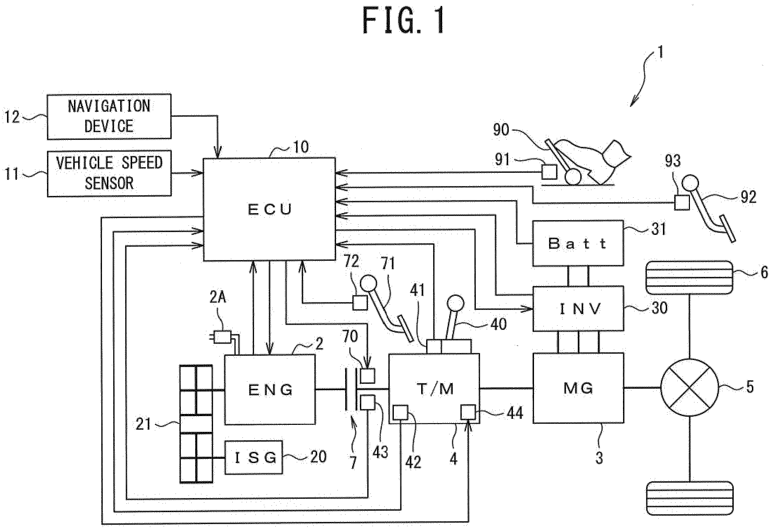

Hereinafter, referring to Figs., a vehicle mounted with a control device according to an embodiment of the present invention will be described. As shown in FIG. 1, the vehicle 1 includes an engine 2 and a motor generator 3 as driving sources, a battery 31 to which/from which electric power is supplied from/to the motor generator 3, a transmission 4, a differential 5, wheels 6, and an ECU 10 (Electronic Control Unit).

The engine 2 is formed with cylinders, being configured to perform, for each cylinder, a series of four steps of an intake step, a compression step, an expansion step and an exhaust step.

The engine 2 includes a catalyst 2A to clean an exhaust gas from the engine 2. The catalyst 2A has a characteristic of providing the purification performance when catalyst temperature is an activation temperature or higher.

The engine 2 is connected with an ISG 20 (Integrated Starter Generator). Specifically, the ISG 20 is connected to a crankshaft of the engine 2 via a belt 21 and the like.

The ISG 20 has a motor function of rotating with supplied electric power to thereby rotate the engine 2 and a generator function of converting a rotation inputted from the crankshaft into electric power.

The motor generator 3 has a function of applying a driving force by an electric power supplied from the battery 31 through an inverter 30 and another function of generating a regenerative electric power with a counter driving force inputted from the differential 5.

The inverter 30 is controlled by the ECU 10 to convert DC power supplied from the battery 31 into three-phase AC power and supply the converted AC power to the motor generator 3 and to convert three-phase AC power generated by the motor generator 3 into DC power and charge the battery 31 with the converted DC power.

The battery 31 is a secondary battery such as a lithium ion battery.

The transmission 4 is configured to change, at a shift ratio corresponding to selected one of shift stages, a rotation speed inputted to an input shaft thereof from the engine 2 and output it from an output shaft thereof. The transmission 4 is AMT (Automated Manual Transmission) in which shift operations in a parallel shaft gear type manual transmission are automated.

A shift stage switching in the transmission 4 is performed by a shift actuator 44. The shift actuator 44 is connected to the ECU 10, to be controlled thereby. The output shaft of the transmission 4 is connected to left and right wheels 6 via the differential 5, the output shaft of the transmission 4 being connected with an output shaft of the motor generator 3. Thus, the vehicle 1 is a hybrid vehicle travelable with a driving force from at least one of the engine 2 and the motor generator 3.

As shift stages to be established in the transmission 4, there are first (low-speed) to fifth (high-speed) forward shift stages and a reverse shift stage. The number of forward shift stages is to be determined depending on the specification of the vehicle 1, not limited to 5 (first to fifth shift stages). The transmission 4 includes synchronizing mechanisms (synchromesh devices) for not only the forward shift stages but also the reverse shift stage.

The shift stages in the transmission 4 are switched therebetween in accordance with a shift position of a shift lever 40 to be operated by a driver. The shift position of the shift lever 40 is detected by a shift position sensor 41. The shift position sensor 41 is connected to the EUC 10, to send the detection result thereto.

As the shift position, the shift lever 40 includes, e.g., parking position (P range), reverse position (R range), neutral position (N range), and forward position (D range), one of which is selected by the driver.

For example, when the driver selects D range as the shift position of the shift lever 40, the ECU 10 drives the shift and clutch actuators 44, 70 in response to the detection signal from an accelerator pedal sensor 91 and the like to thereby establish one of the first to fifth forward shift stages to change the rotation speed.

In addition, when the driver switches the shift position from the selected D range to R range, the ECU 10 drives the shift and clutch actuators 44, 70 to switch the established shift stage from one of the forward shift stages to the reverse shift stage.

D range and R range are shift positions at which the vehicle is allowed to travel, each of which corresponds to a traveling position. P range and N range are shift positions at which the engine 2 is allowed to start, each of which corresponds to a start position.

The transmission 4 is provided with a neutral switch 42 connected to the ECU 10. The neutral switch 42 is used to detect that none of the shift stages is established in the transmission 4, i.e., to detect a neutral state, the neutral switch 42 being configured to be turned ON when the transmission 4 is in the neutral state.

A clutch 7 is provided on a power transmission path between the engine 2 and the transmission 4. The clutch 7 is a friction clutch, for example. The engine 2 and the transmission 4 are interconnected via the clutch 7. The clutch 7 is configured to connect/disconnect the engine 2 and the transmission 4 to/from each other. The clutch 7 constitutes a power transmission mechanism.

Thus, the transmission 4 is transmitted with power from the engine 2 via the clutch 7, which is configured to switch between the shift stages in response to a shift operation. The clutch 7 includes a clutch disc connected to the input shaft of the transmission 4 so as to rotate together therewith. Hence, a rotation number of the clutch disc (hereinafter also referred to as "rotation number of clutch 7") is equal to that of the input shaft of the transmission 4.

The clutch 7 is actuated by the clutch actuator 70 to thereby be switched among an engagement state where power is transmitted between the engine 2 and the motor generator 3, a disengagement state (release state) where no power is transmitted therebetween, and a half-clutch state where torque is transmitted therebetween with rotation difference (i.e., while the engine 2 and the motor generator 3 rotate with different rotation speeds). The clutch actuator 70 is connected to the ECU 10, to be controlled thereby.

The clutch 7 is provided with a clutch rotation number sensor 43 to detect rotation number of the clutch 7. The clutch rotation number sensor 43 is connected to the ECU 10 to send the detection result thereto. The clutch rotation number sensor 43 is not configured to detect a rotation direction of the clutch 7.

The ECU 10 controls the clutch actuator 70 in accordance with a depression amount of a clutch pedal 71 to be operated by the driver, as if a manual clutch is operated.

The depression amount of the clutch pedal 71 is detected by a clutch pedal sensor 72. The clutch pedal sensor 72 is connected to the ECU 10, being configured to send a signal in response to the depression amount of the clutch pedal 71 to the ECU 10.

The vehicle 1 includes an accelerator pedal 90 to be operated by the driver. A depression amount of the accelerator pedal 90 is detected by an accelerator pedal sensor 91. The accelerator pedal sensor 91 is connected to the ECU 10, being configured to detect the depression amount of the accelerator pedal 90 as an accelerator opening and send a signal in response to the detected accelerator opening to the ECU 10.

The vehicle 1 includes a brake pedal 92 to be operated by the driver. A depression amount of the brake pedal 92 is detected by a brake pedal sensor 93. The brake pedal sensor 93 is connected to the ECU 10, being configured to send a signal in response to the depression amount of the brake pedal 92 to the ECU 10.

The vehicle 1 includes a navigation device 12. The navigation device 12 includes GPS (Global Positioning System) to position the vehicle 1 to thereby acquire a current position thereof, and a storage device to store a map, the navigation device 12 being configured to calculate a traveling route from the current position to a destination position and a travel distance thereof. As the navigation device 12, an in-vehicle navigation device can be used. Alternatively, a smart phone with a navigation function may be used, being of an occupant in the vehicle 1.

The ECU 10 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the ECU 10, with various constants and maps. That is, the CPU executes the program stored in the ROM using the RAM as an operation area, causing the computer unit to function as the ECU 10.

The ECU 10 is connected with a vehicle speed sensor 11 in addition to the above-mentioned sensors. The vehicle speed sensor 11 is configured to detect a vehicle speed of the vehicle 1 and send the detection result to the ECU 10.

The ECU 10 is configured to switch between control modes for the vehicle 1. As the control modes, there are an electric vehicle traveling mode (hereinafter referred to as "EV mode") and a hybrid traveling mode (hereinafter referred to as "HEV mode"), for example.

In the EV mode, the vehicle 1 is driven, with the engine 2 stopped, with motor torque of the motor generator 3. Specifically, in the EV mode, the motor generator 3 is controlled so as to satisfy a driver required torque with only motor torque of the motor generator 3. Note that in the EV mode, the clutch 7 is released (i.e., is placed in the disengagement state).

In the HEV mode, the vehicle 1 is driven with at least engine torque of the engine 2. Specifically, in the HEV mode, the vehicle 1 is driven with only the engine torque or both of the engine torque and the motor torque. For example, in the HEV mode, the motor generator 3 and the engine 2 are both controlled so as to satisfy the driver required torque with total torque of the motor torque and the engine torque. As such a case where the vehicle 1 is driven with the total torque, there is a case where the engine 2 outputs the engine torque to compensate the shortage of the motor torque to the driver required torque or a case where the motor generator 3 outputs the motor torque to compensate the shortage of the engine torque to the driver required torque. Note that in the HEV mode, the clutch 7 is engaged (i.e., is placed in the engagement state).

The ECU 10 is connected with the navigation device 12. The ECU 10 acquires, from the navigation device 12, the traveling route and distance from the current position to the destination position. The ECU 10 constitutes an acquisition unit of the present invention.

The ECU 10 switches between the EV mode and the HEV mode based on the driver required torque and SOC (State Of Charge) of the battery 31, the driver required torque being determined based on the accelerator opening and a rotation number of the engine 2.

When, during the EV mode, the depression amount of the accelerator pedal 90 increases to thereby disenable a maximum motor torque (motor outputtable torque to be determined in accordance with the SOC of the battery 31) in accordance with the SOC of the battery 31 to satisfy the driver required torque, the ECU 10 switches the control mode from the EV mode to the HEV mode. Upon switching from the EV mode to the HEV mode, the engine 2 is started. In the HEV mode, the engine 2 and the motor generator 3 are both controlled so as to satisfy the driver required torque with the total torque of the engine and motor torques.

On the other hand, when, during the HEV mode, the depression amount of the accelerator pedal 90 decreases to thereby enable the maximum motor torque in accordance with the SOC of the battery 31 to satisfy the driver required torque, the ECU 10 switches the control mode from the HEV mode to the EV mode. Upon switching from the HEV mode to the EV mode, the engine 2 is stopped.

Additionally, the ECU 10 performs a catalyst warm-up control of operating the engine 2 to rise temperature of the catalyst 2A (hereinafter also referred to as "catalyst temperature").

Thus, the vehicle 1 is a hybrid vehicle traveling with the EV mode and the HEV mode to be switched therebetween, in which the engine 2 is intermittently operated during vehicle traveling. Due thereto, when the engine 2 is started upon switching from the EV mode to the HEV mode, the catalyst 2A may not become an activation temperature. If the catalyst temperature is low (e.g., catalyst temperature is yet to rise to the activation temperature), an exhaust gas purification performance may become worse. Note that the exhaust gas purification performance means a performance with which exhaust gas is purified.

For this reason, in order to prevent the exhaust gas purification performance from becoming worse, it is preferable that the catalyst warm-up control (hereinafter also referred to as "catalyst warm-up") is performed prior to a timing, at which the EV mode is predicted to be switched to the HEV mode, to thereby rise the catalyst temperature to the activation temperature or higher so as to allow the exhaust gas purification performance of the catalyst 2A to be sufficiently provided upon start of the HEV mode.

Accordingly, the ECU 10 calculates an arrival timing, at which the vehicle 1 arrives at a point where the EV mode is predicted to be switched to the HEV mode, based on information including the traveling route to the destination position acquired from the navigation device 12, and performs the catalyst warm-up control prior to the arrival timing.

Specifically, the ECU 10, in real-time, calculates a start prediction point on the traveling route, at which the engine 2 is predicted to be started due to switching to the HEV mode, and an arrival period t (D) of time (i.e., a period of time required to arrive at the start prediction point from the current point), for which the vehicle is predicted to travel from the current point to the calculated start prediction point. Then, the ECU 10 performs the catalyst warm-up control at a timing before the predicted arrival period t (D) becomes zero (i.e., at a timing before arriving at the calculated start prediction point).

The start prediction point is determined mainly based on the current SOC of the battery 31, a traveling load on the traveling route (a road surface condition between the current point and the destination point, such as an uphill road), and a current state of the motor generator 3 or the inverter 30. The ECU 10 determines, as the start prediction point, a point on the traveling route, at which the SOC of the battery 31 is predicted to drop to a predetermined value, for example. Alternatively, the ECU 10 may determine, as the start prediction point, a point on the traveling route, at which the traveling load on the traveling route is predicted to exceed the maximum motor torque of the motor generator 3. Alternatively, the ECU 10 may determine, as the start prediction point, a point on the traveling route, at which temperature of the motor generator 3 or the inverter 30 is predicted to become a predetermined temperature or higher to thereby be in a hot-temperature state.

By the way, when the depression amount of the accelerator pedal 90 is increased by the driver to thereby request the engine torque to compensate the shortage of the motor torque to the driver required torque, the ECU 10 determines that a condition for switching from the EV mode to the HEV mode is established and following the determination, starts the engine 2 to switch the EV mode to the HEV mode. Thereafter, when the depression amount of the accelerator pedal 90 is decreased by the driver to thereby render the engine torque unnecessary to compensate the shortage of the motor torque to the driver required torque, the ECU 10 determines that a condition for switching from the HEV mode to the EV mode is established and following the determination, stops the engine 2 to switch the HEV mode to the EV mode.

Such an engine start/stop in response to the driver required torque is performed in accordance with the depression amount of the accelerator pedal 90 to be operated by the driver and thus, is difficult to be accurately determined in advance whether to be performed (i.e., it is difficult to accurately predict when/what amount the driver depresses the accelerator pedal 90). In other words, the engine start/stop in response to the driver required torque may suddenly occur before the vehicle 1 arrives at the start prediction point.

In consideration of the above-mentioned difficulty, for example, even if the catalyst warm-up control is, upon establishment of the condition for switching to the EV mode, performed so as to continue an engine operation until warm-up of the catalyst 2A is completed (i.e., until catalyst temperature rises to a warm-up completion temperature T(H)), the exhaust gas purification performance may be or may not be sufficiently maintained until the vehicle 1 arrives at the start prediction point (i,e,, there is a case where the exhaust gas purification performance is/is not sufficiently maintained until the vehicle 1 arrives at the start prediction point). In the latter case, unnecessary warm-up is to be performed for the catalyst 2A, worsening fuel efficiency performance.

For this reason, in the present embodiment, when the engine is started after the condition for switching to the HEV mode based on the driver required torque is established, the ECU 10 starts to calculate the followings:
a warm-up completion period of time t(A) required to rise catalyst temperature to the warm-up completion temperature T(H) by the catalyst warm-up control;
a catalyst performance maintaining period of time t(B) for which the catalyst temperature of the warm-up completion temperature T(H) drops to, with the engine 2 stopped, a lower limit temperature T(L) down to which the exhaust gas purification performance is maintained; and
a catalyst warm-up efficient period of time t(C) which is the total of the warm-up completion period t(A) and the catalyst performance maintaining period t(B).
Note that the lower limit temperature T(L) is e.g., the activation temperature of the catalyst 2A.

The ECU 10 calculates these periods (the warm-up completion period t(A), the catalyst performance maintaining period t(B), and the catalyst warm-up efficient period t(C)) as long as the engine 2 is operated (i.e., only during the engine operation), while monitoring actual temperature of the catalyst 2A and the like.

Specifically, the ECU 10 calculates the warm-up completion period t(A) based on the warm-up completion temperature T(H), the current catalyst temperature, and at least one of a current outside air temperature, a vehicle speed of the vehicle 1 on the calculated traveling route, and a driving force of the vehicle 1 on the calculated traveling route. The ECU 10 calculates the catalyst performance maintaining period t(B) based on a difference between the warm-up completion temperature T(H) and the lower limit temperature T(L), the current outside air temperature, and the vehicle speed on the calculated traveling route.

Then, when the predicted arrival period t(D) is equal to or longer than the calculated catalyst warm-up efficient period t(C), the ECU 10 prohibits the catalyst warm-up control if the condition for switching to the EV mode is established (i.e., stops the engine 2 upon establishment of this condition).

On the other hand, when the predicted arrival period t(D) is shorter than the calculated catalyst warm-up efficient period t(C), the ECU 10 allows the catalyst warm-up control even if the condition for switching to the EV mode is established (i.e., continues, even after establishment of this condition, the engine operation to thereby warm-up the catalyst 2A).

In this case (in a case where the ECU 10 allows the catalyst warm-up control following the establishment of said condition), the ECU 10 may estimate, during the engine operation in the catalyst warm-up control, an after-engine-stop catalyst performance maintaining period of time t(E) until catalyst temperature drops to the lower limit temperature T(L) after the engine 2 is stopped, and stop the engine 2 if the predicted arrival period t(D) is shorter than the estimated after-engine-stop catalyst performance maintaining period t(E). Note that the ECU 10 can estimate the after-engine-stop catalyst performance maintaining period t(E) based on the fact that a drop rate (inclination) of catalyst temperature when the engine 2 is stopped is constant.

There is a correlation between catalyst temperature and engine cooling water temperature. Due thereto, the ECU 10 may store, in advance, threshold values for the engine cooling water temperature respectively corresponding to the warm-up completion temperature T(H) and the lower limit temperature T(L) and compare the engine cooling water temperature with the stored threshold values, thereby determining whether the catalyst warm-up control should be performed.

Specifically, the ECU 10 may calculate:
a period of time for which the engine cooling water temperature of the engine 2 rises to a first of the threshold values which corresponds to the warm-up completion temperature T(H), as the warm-up completion period t(A);
a period of time for which the engine cooling water temperature of the engine 2 drops to a second of the threshold values which corresponds to the lower limit temperature T(L), as the catalyst performance maintaining period t(B); and
total of these calculated periods, as the catalyst warm-up efficient period t(C).

That is, the ECU 10 may determine, based on an engine cooling water temperature instead of catalyst temperature, whether the catalyst warm-up control should be performed.

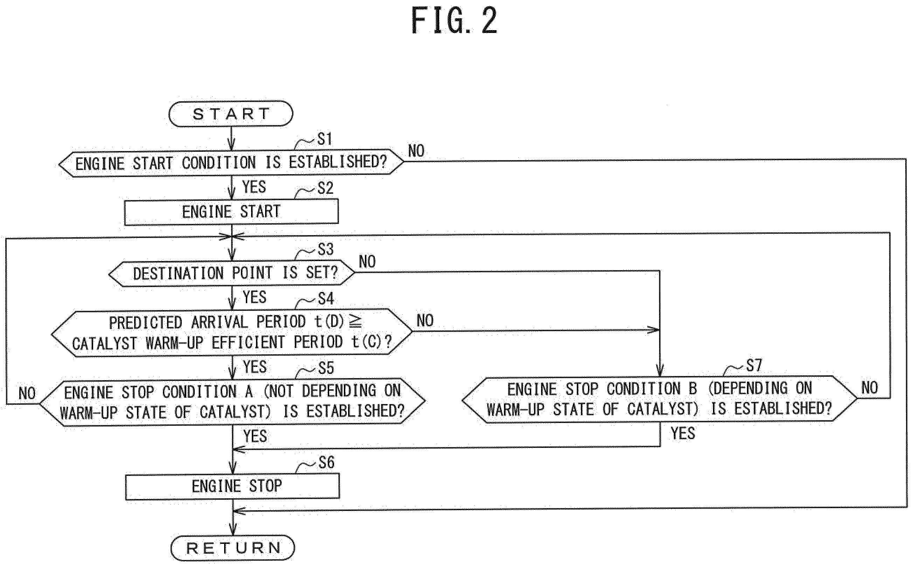

Referring to FIG. 2, a control operation to be performed in the control device according to the present embodiment will be explained. This operation is repeated at a short interval.

As shown in FIG. 2, the ECU 10 determines whether an engine start condition is established (step S1). If "YES" at step S1, the ECU 10 proceeds to step S2. Otherwise (if "NO" at step S1), the ECU 10 terminates this operation to thereby repeat it.

The engine start condition is a condition for switching from the EV mode to the HEV mode, based on e.g., SOC of the battery 31 and an operation amount (depression amount) of the accelerator pedal 90 by the driver. The ECU 10 determines, at step S1, that the engine start condition is established if the driver required torque determined based on the operation amount of the accelerator pedal 90 reaches the maximum motor torque of the motor generator 3 estimated based on SOC of the battery 31 and the like, thereafter starting the engine 2 at step S2.

Thereafter, the ECU 10 determines, at step S3, whether the destination point and the calculated traveling route are both set in the navigation device 12. If "YES" at step S3, the ECU 10 proceeds to step S4, otherwise proceeding to step S7.

At step S4, the ECU 10 calculates the start prediction point, at which the engine 2 is predicted to be started, and the arrival period t(D) for which the vehicle 1 is predicted to travel from the current point to the start prediction point, to thereby determine whether or not the predicted arrival period t(D) is equal to or longer than the catalyst warm-up efficient period t(C). If "YES" at step S4, the ECU 10 proceeds to step S5, otherwise proceeding to step S7.

At step S5, the ECU 10 determines whether an engine stop condition A is established. If "YES" at step S5, the ECU 10 proceeds to step S6, otherwise returning to step S3.

The engine stop condition A is a condition on which the engine 2 is stopped with switching to the EV mode, not depending on warm-up state of the catalyst 2A. For example, the engine stop condition A is based on SOC of the battery 31 and an operation amount (depression amount) of the accelerator pedal 90 by the driver. Specifically, the ECU 10 determines, at step S5, that the engine stop condition A is established if the driver required torque determined based on the operation amount of the accelerator pedal 90 falls below the maximum motor torque of the motor generator 3 estimated based on SOC of the battery 31 and the like, thereafter proceeding to step S6 to stop the engine 2 and terminating this operation.

Thus, when the predicted arrival period t(D) is equal to or longer than the catalyst warm-up efficient period t(C) ("YES" at step S4), the ECU 10 prohibits the catalyst warm-up control (an engine operation to warm-up the catalyst 2A) from being performed if the engine stop condition A for switching to the EV mode based on the driver required torque ("YES" at step S5).

At step S7, the ECU 10 determines whether an engine stop condition B is established, and proceeds to step S6 if the engine stop condition B is established, otherwise returning to step S3.

The engine stop condition B is an engine stop condition on which the engine 2 is stopped with switching to the EV mode, depending on warm-up state of the catalyst 2A. That is, the engine stop condition B includes, in addition to the engine stop condition A, a condition for the catalyst temperature or the engine cooling water temperature as to catalyst warm-up. For example, if the catalyst temperature is the lower limit temperature T(L) or higher, down to which the exhaust gas purification performance is maintained, when the engine stop condition A is established, the ECU 10 determines that the engine stop condition B is established, proceeding to step S6 to stop the engine 2 and thereafter terminating this operation. In other words, as to determination of the engine stop condition B, the ECU 10 never determines that the engine stop condition B is established if the catalyst temperature is lower than the lower limit temperature T(L) even when the engine stop condition A is established.

Thus, when the predicted arrival period t(D) is shorter than the catalyst warm-up efficient period t(C) ("NO" at step S4), even if the engine stop condition A for switching to the EV mode based on the driver required torque, the ECU 10 does not immediately stop the engine 2 but allows the catalyst warm-up control to be performed. That is, in this case, the ECU 10 continues the engine operation to warm-up the catalyst 2A even after the engine stop condition A is established, and stops the engine 2 upon establishment of the engine stop condition B depending on warm-up state of the catalyst 2A.

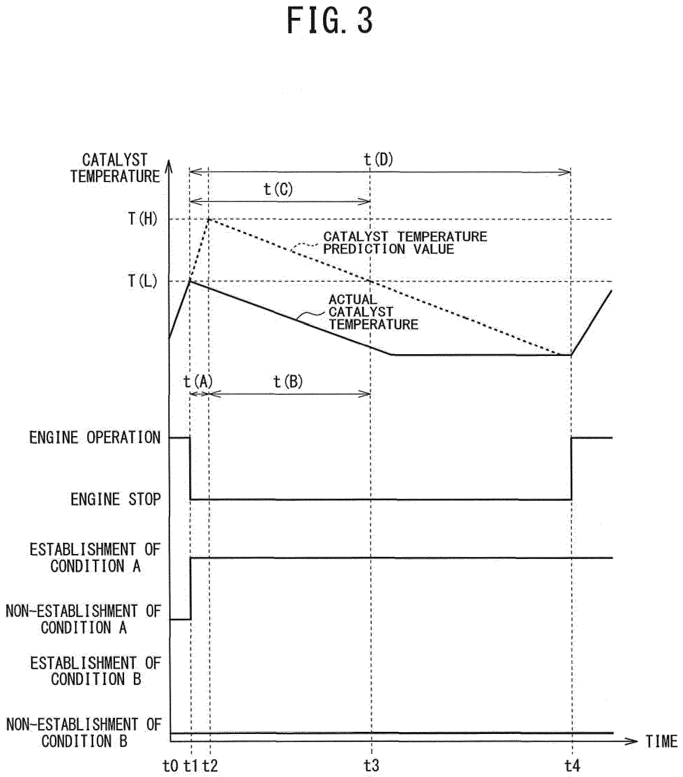

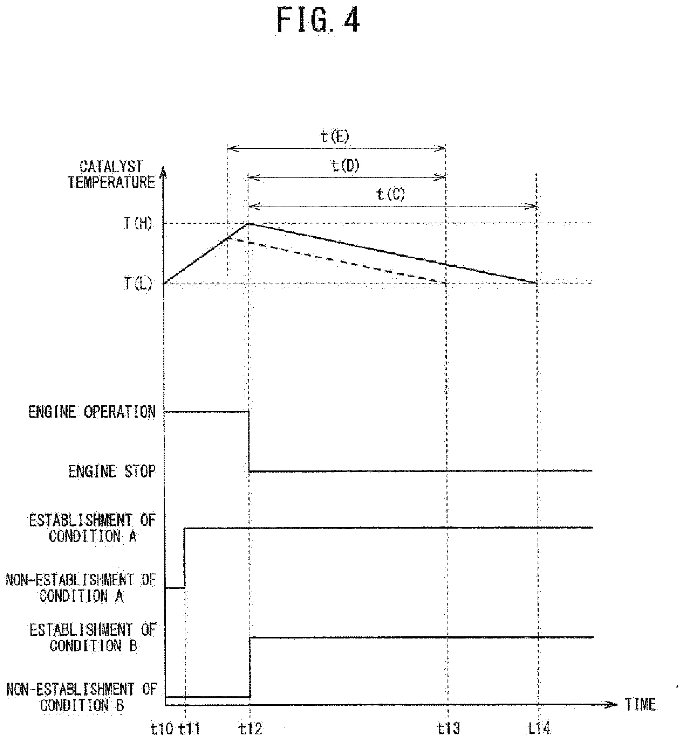

Referring to FIGS. 3 and 4, a status transition of the vehicle 1 during the above-mentioned control operation to be performed by the ECU 10 will be explained. In each of FIGS. 3 and 4, vertical axis represents, from above, catalyst temperature, engine operation/stop, establishment/non-establishment of the engine stop condition A (indicated as "condition A" in FIGS.), establishment/non-establishment of the engine stop condition B (indicated as "condition B" in FIGS.), and lateral axis represents elapse of time.

Firstly, referring to FIG. 3, there will be explained an example of a status transition in the vehicle 1 when the predicted arrival period t(D) to arrive at the start prediction point at which the engine 2 is predicted to be started is relatively long (e.g., when the vehicle 1 travels on relatively-long flat road surface) in a case where the engine 2 is started in response to increase of the driver required torque due to a depression of the accelerator pedal 90. Note that, in FIG. 3, an actual catalyst temperature indicated with a solid line represents a transition of an actual temperature of the catalyst 2A in a case where the engine 2 is stopped at time t1, and a catalyst temperature prediction value indicated with a broken line represents a transition of a predicted temperature of the catalyst 2A in a case where the engine 2 is continued to be operated to warm-up the catalyst 2A until time t2. The actual catalyst temperature can be obtained by, for example, measuring an exhaust gas temperature (the measured exhaust gas temperature can be considered as the actual catalyst temperature).

In FIG. 3, at time t0, the engine 2 is already started in response to the depression of the accelerator pedal 90 to thereby drive the vehicle 1 in the HEV mode. Additionally, at time t0, neither of the engine stop conditions A, B is established, and the catalyst temperature rises due to the engine operation.

At this time t0, the ECU 10 starts calculations of the warm-up completion period t(A), the catalyst performance maintaining period t(B), and the catalyst warm-up efficient period t(C), and comparison between the predicted arrival period t(D) and the catalyst warm-up efficient period t(C). These calculations and comparison are continuously performed until the engine 2 is stopped after the engine 2 is started.

Thereafter, at time t1, the predicted arrival period t(D) exceeds the warm-up efficient period t(C) with establishment of the engine stop condition A, stopping the engine 2 to thereby switch the HEV mode to the EV mode. At time t1, since the engine 2 is stopped, the catalyst temperature (actual catalyst temperature) starts to drop.

The warm-up efficient period t(C) at time t1, as indicated in FIG. 3, is calculated using a prediction value of the catalyst temperature (predicted catalyst temperature) in a case where the catalyst warm-up control (an engine operation to warm-up the catalyst 2A) is continued even after time t1. As shown in FIG. 3, in a case where the engine 2 is not stopped at time t1 but is continued to be operated to warm-up the catalyst 2A even after time t1, it is predicted that the catalyst temperature reaches the warm-up completion temperature T(H) at time t2, at which the warm-up completion period t(A) elapses from time t1, to thereby stop the catalyst warm-up control (stop the engine 2). Then, it is also predicted that the catalyst temperature continues to drop after time t2 to thereby be lower than the lower limit temperature T(L) at time t3 at which the catalyst performance maintaining period t(B) elapses from time t2.

That is, in the case shown in FIG. 3, at the timing of time t1, it is predicted that: although the vehicle 1 arrives, at time t4 at which the predicted arrival period t(D) elapses from time t1, at the start prediction point to thereby start the engine 2, the catalyst temperature drops below the lower limit temperature T(L) at time t3 prior to time t4. Hence, there is a high possibility that the catalyst temperature is not maintained to be the lower limit temperature T(L) or higher until time t4 at which the vehicle 1 arrives at the start prediction point even if the engine 2 is not stopped at time t1 but is continued to be operated to warm-up the catalyst 2A until time t2.

Thus, as shown in FIG. 3, in a period where the engine 2 is operated (a period from time t0 to time t1 in FIG. 3), if the predicted arrival period t(D) is the warm-up efficient period t(C) or longer, the engine 2 is stopped upon establishment of the engine stop condition A (at time t1 in FIG. 3). Note that the catalyst temperature drops due to the engine stop at time t1 but rises at time t4, at which the vehicle 1 arrives at the start prediction point, due to an engine start to be performed thereat.

Secondly, referring to FIG. 4, there will be explained an example of a status transition in the vehicle 1 when the predicted arrival period t(D) to arrive at the start prediction point at which the engine 2 is predicted to be started is relatively short (e.g., when the vehicle 1 travels on road surface with relatively-large gradient) in a case where the engine 2 is started in response to increase of the driver required torque due to a depression of the accelerator pedal 90. Note that, as well as FIG. 3, in FIG. 4, a solid line as to the catalyst temperature represents a transition of an actual temperature of the catalyst 2A in a case where the engine 2 is stopped at time t12, and a broken line as to the catalyst temperature represents a transition of a predicted temperature of the catalyst 2A in a case where the engine 2 is stopped at a timing between time t11 and time t12.

In FIG. 4, at time t10, the engine 2 is already started in response to the depression of the accelerator pedal 90 to thereby drive the vehicle 1 in the HEV mode. Additionally, at time t10, neither of the engine stop conditions A, B is established, and the catalyst temperature rises due to the engine operation.

At this time t10, the ECU 10 starts calculations of the warm-up completion period t(A), the catalyst performance maintaining period t(B), and the catalyst warm-up efficient period t(C), and comparison between the predicted arrival period t(D) and the catalyst warm-up efficient period t(C). These calculations and comparison are continuously performed until the engine 2 is stopped after the engine 2 is started.

Thereafter, at time t11, the predicted arrival period t(D) falls below the warm-up efficient period t(C) with establishment of the engine stop condition A, not stopping the engine 2 to thereby continue the engine operation to warm-up the catalyst 2A.

Thereafter, at time t12, the catalyst temperature rises to the warm-up completion temperature T(H). Also thereat, the predicted arrival period t(D) falls below the warm-up efficient period t(C). That is, time t13 at which the predicted arrival period t(D) elapses from time t12 is prior to time t14 at which the warm-up efficient period t(C) elapses from time t12. In addition, at time t12, the actual catalyst temperature reaches the warm-up completion temperature T(H) to thereby establish the engine stop condition B. Due thereto, at time t12, the engine 2 is stopped to thereby switch the HEV mode to the EV mode, with which the catalyst temperature starts to drop. The catalyst temperature is maintained to be higher than the lower limit temperature T(L) even at time t13 at which the predicted arrival period t(D) elapses and thereafter drops to the lower limit temperature T(L) at t14 at which the predicted arrival period t(D) elapses.

Note that in FIG. 4, in order to explain the transition of the actual catalyst temperature, the engine 2 is stopped even after time t13 but actually is to be started upon elapse of the predicted arrival period t(D).

Thus, as shown in FIG. 4, in a period where the engine 2 is operated (a period from time t10 to time t12 in FIG. 4), if the predicted arrival period t(D) is shorter than the warm-up efficient period t(C), the engine 2 is stopped upon establishment of not the engine stop condition A but the engine stop condition B.

At time t13 at which the engine 2 is predicted to be started, in consideration of maintaining the exhaust gas purification performance, the catalyst temperature may not be higher than the lower limit temperature T(L), but may be equal thereto. That is, the engine 2 is unnecessary to be operated until the catalyst temperature rises to the warm-up completion temperature T(H).

Thus, in a case of allowing the catalyst warm-up control to be performed even upon establishment of the engine stop condition A, the ECU 10 may estimate, during the engine operation in the catalyst warm-up control, the after-engine-stop catalyst performance maintaining period t(E) until the catalyst temperature drops to the lower limit temperature T(L) after the engine 2 is stopped, and stop the engine 2 if the predicted arrival period t(D) is shorter than the estimated after-engine-stop catalyst performance maintaining period t(E).

That is, in a case of allowing the catalyst warm-up control to be performed to thereby continue, even after time t11, the engine operation to warm-up the catalyst 2A, the ECU 10 may stop, prior to time t12 at which the catalyst temperature rises to the warm-up completion temperature T(H), the engine 2 if the predicted arrival period t(D) is shorter than the after-engine-stop catalyst performance maintaining period t(E).

As mentioned above, in the present embodiment, the ECU 10 performs: the catalyst warm-up control of operating the engine 2 to rise the catalyst temperature; the switching control of switching between the EV mode and the HEV mode based on the driver required torque; and the calculations of the start prediction point on the calculated traveling route and the predicted arrival period t(D), the engine 2 being predicted to be, at the start prediction point, started to thereby switch the EV mode to HEV mode, the vehicle 1 being predicted to travel from the current point to the start prediction point for the predicted arrival period t(D).

When starting the engine 2 upon establishment of the condition for switching to the HEV mode based on the driver required torque, the ECU 10 starts to calculate: the warm-up completion period t(A) required to rise the catalyst temperature to the warm-up completion temperature T(H) by the catalyst warm-up control; the catalyst performance maintaining period t(B) for which the catalyst temperature of the warm-up completion temperature T(H) drops to, with the engine 2 stopped, the lower limit temperature T(L) down to which the exhaust gas purification performance is maintained; and the catalyst warm-up efficient period t(C) which is the total of the warm-up completion period t(A) and the catalyst performance maintaining period t(B).

When the predicted arrival period t(D) is the catalyst warm-up efficient period t(C) or longer, the ECU 10 stops the engine 2 to thereby prohibit the catalyst warm-up control upon establish of the condition for switching to the EV mode based on the driver required torque.

Thus, when it is predicted that even if the engine 2 is continued to be operated until the catalyst warm-up is completed, the exhaust gas purification performance is not sufficiently maintained until the vehicle 1 arrives at the start prediction point, at which the engine 2 is to be started, after the catalyst warm-up is completed, the ECU 10 prohibits the catalyst warm-up control to stop the engine 2, preventing fuel for catalyst warm-up from being consumed at switching to the EV mode. As a result, it is possible to avoid unnecessary catalyst warm-up control to thereby improve fuel efficiency performance.

Additionally, when the predicted arrival period t(D) is shorter than the catalyst warm-up efficient period t(C), the ECU 10 allows the catalyst warm-up control to be performed if the condition for switching to the EV mode is established.

Thereby, when it is predicted that the exhaust gas purification performance is sufficiently maintained, even after the catalyst warm-up is completed, until the vehicle 1 arrives at the start prediction point at which the engine 2 is to be started, the engine 2 is not immediately stopped at switching to the EV mode to thereby warm-up the catalyst 2A, improving the exhaust gas purification performance at switching to the HEV mode.

In such a case where the ECU 10 allows the catalyst warm-up control, it may estimate, during the engine operation in the catalyst warm-up control, the after-engine-stop catalyst performance maintaining period t(E) until the catalyst temperature drops to the lower limit temperature T(L) after the engine 2 is stopped, and stop the engine 2 if the predicted arrival period t(D) is shorter than the estimated after-engine-stop catalyst performance maintaining period t(E).

Thereby, even before the catalyst temperature rises to the warm-up completion temperature T(H), the engine 2 is stopped if the predicted arrival period t(D) is shorter than the after-engine-stop catalyst performance maintaining period t(E), shortening a period of time for which the engine 2 is operated to warm-up the catalyst 2A to thereby improve fuel efficiency performance.

Instead of the above-mentioned warm-up completion period t(A), the catalyst performance maintaining period t(B), and the catalyst warm-up efficient period t(C), the ECU 10 may respectively calculate:
the period for which the engine cooling water temperature of the engine 2 rises to the first threshold value which corresponds to the warm-up completion temperature T(H);
the period for which the engine cooling water temperature of the engine 2 drops to the second threshold value which corresponds to the lower limit temperature T(L); and
the total of these calculated periods.

That is, the ECU 10 may determine, based on the engine cooling water temperature instead of the catalyst temperature, whether the catalyst warm-up control should be performed.

Thereby, a control as to a catalyst warm-up and a control as to an engine operation can be both performed commonly using the engine cooling water temperature greatly related to fuel efficiency performance of the engine 2, improving both the exhaust gas purification performance of the catalyst 2A and the fuel efficiency performance of the engine 2.

The hybrid vehicle 1 includes the navigation device 12 to calculate a traveling route to a destination position to be set by the driver. The ECU 10 acquires the calculated traveling route from the navigation device 12.

Thus, the ECU 10 causes the navigation device 12 to calculate the traveling route to thereby acquire the calculated traveling route therefrom, reducing an operation load of the ECU 10.

Although the embodiment of the present invention is disclosed above, it is obvious that those skilled in the art can modify it without departing from the scope of the present invention as defined by the appended claims.

### [Reference Signs List]

1: vehicle (hybrid vehicle)
2: engine
2A: catalyst
3: motor generator (motor)
   10: ECU (acquisition unit, control unit)
   12: navigation device
t(A): warm-up completion period of time
t(B): catalyst performance maintaining period of time
t(C): catalyst warm-up efficient period of time
t(D): predicted arrival period of time
T(H): warm-up completion temperature
T(L): lower limit temperature

## Claims

1. A control device of a hybrid vehicle (1) with an EV mode and an HEV mode, the hybrid vehicle (1) including:
an engine (2) and a motor (3) as driving sources; and
a catalyst (2A) to purify an exhaust gas from the engine (2),
the EV mode allowing the hybrid vehicle (1) to travel, with the engine stopped, with a motor torque of the motor (3),
the HEV mode allowing the hybrid vehicle (1) to travel with an engine torque of the engine (2) and the motor torque,
the control device comprising:
an acquisition unit (10) to acquire a traveling route from a current point to a destination point; and
a control unit (10) to perform a catalyst warm-up control, a switching control, and a calculation,
the catalyst warm-up control being of operating the engine (2) to rise catalyst temperature,
the switching control being of switching between the EV mode and the HEV mode on conditions therefor based on a driver required torque,
the calculation being of calculating a start prediction point on the acquired traveling route, at which the engine (2) is predicted to be started for switching to the HEV mode, and an arrival period of time (t(D)) for which the hybrid vehicle (1) is predicted to travel from the current point to the start prediction point,
wherein while the engine (2) is operated on one of the conditions for switching to the HEV mode, the control unit (10):
calculates a warm-up completion period of time (t(A)) for which the catalyst temperature rises to a warm-up completion temperature (T(H)) when the catalyst warm-up control is performed, and a catalyst performance maintaining period of time (t(B)) for which the catalyst temperature of the warm-up completion temperature (T(H)) drops to, with the engine (2) stopped, a lower limit temperature (T(L)) down to which an exhaust gas purification performance is maintained, and a catalyst warm-up efficient period of time (t(C)) which is the total of the warm-up completion period (t(A)) and the catalyst performance maintaining period (t(B)),
the control device being **characterized in that**
the control unit (10) prohibits the catalyst warm-up control from being performed if an other condition for switching to the EV mode is established when the calculated arrival period (t(D)) is equal to or longer than the calculated catalyst warm-up efficient period (t(C)).

2. The control device as claimed in claim 1, wherein
the control unit (10) allows the catalyst warm-up control to be performed if the other condition for switching to the EV mode is established when the calculated arrival period (t(D)) is shorter than the calculated catalyst warm-up efficient period (t(C)).

3. The control device as claimed in claim 2, wherein
when allowing the catalyst warm-up control, the control unit (10):
estimates an after-engine-stop catalyst performance maintaining period of time until the catalyst temperature drops to the lower limit temperature (T(L)) after the engine (2) is stopped; and
stops the engine (2) if the calculated arrival period (t(D)) is shorter than the estimated after-engine-stop catalyst performance maintaining period.

4. The control device as claimed in any one of claims 1 to 3, wherein
the control unit (10) calculates:
a period of time for which an engine cooling water temperature of the engine (2) rises to a first threshold value which corresponds to the warm-up completion temperature (T(H)), as the warm-up completion period (t(A));
a period of time for which the engine cooling water temperature of the engine (2) drops to a second threshold value which corresponds to the lower limit temperature (T(L)), as the catalyst performance maintaining period (t(B)); and
the total of these calculated periods, as the catalyst warm-up efficient period (t(C)),
the control unit being configured to determine whether the catalyst warm-up control is prohibited or allowed, using these calculated periods based on the engine cooling water temperature.

5. The control device as claimed in any of claims 1 to 4, wherein
the hybrid vehicle (1) includes a navigation device (12) to calculate the traveling route, and
the acquisition unit (10) acquires the traveling route from the navigation device (12).

## Patentansprüche

1. Steuerungsvorrichtung für ein Hybridfahrzeug (1) mit einem EV-Modus und einem HEV-Modus,
wobei das Hybridfahrzeug (1) Folgendes beinhaltet:
einen Verbrennungsmotor (2) und einen Motor (3) als Antriebsquellen; und
einen Katalysator (2A) zum Reinigen eines Abgases aus dem Verbrennungsmotor (2),
den EV-Modus, der dem Hybridfahrzeug (1) ermöglicht, bei gestopptem Verbrennungsmotor mit einem Motordrehmoment des Motors (3) zu fahren,
den HEV-Modus, der dem Hybridfahrzeug (1) ermöglicht, mit einem Verbrennungsmotordrehmoment des Verbrennungsmotors (2) und dem Motordrehmoment zu fahren,
wobei die Steuerungsvorrichtung Folgendes umfasst:
eine Erfassungseinheit (10) zum Erfassen einer Fahrtroute von einem aktuellen Punkt zu einem Zielpunkt; und
eine Steuerungseinheit (10) zum Durchführen einer Katalysatoraufwärmsteuerung, einer Umschaltsteuerung und einer Berechnung,
wobei die Katalysatoraufwärmsteuerung derart ist, dass sie den Verbrennungsmotor (2) betreibt, um eine Katalysatortemperatur zu erhöhen,
die Umschaltsteuerung derart ist, dass sie zwischen dem EV-Modus und dem HEV-Modus unter den Bedingungen dafür basierend auf einem von einem Fahrer benötigten Drehmoment umschaltet,
die Berechnung derart ist, dass sie einen Startvorhersagepunkt auf der erfassten Fahrtroute, an dem der Verbrennungsmotor (2) voraussichtlich gestartet wird, um in den HEV-Modus umzuschalten, und eine Ankunftszeitspanne (t(D)) berechnet, für die das Hybridfahrzeug (1) voraussichtlich von dem aktuellen Punkt zu dem Startvorhersagepunkt fährt,
wobei die Steuerungseinheit (10), während der Verbrennungsmotor (2) unter einer der Bedingungen für das Umschalten in den HEV-Modus betrieben wird:
eine Aufwärmabschlusszeitspanne (t(A)), während der sich die Katalysatortemperatur auf eine Aufwärmabschlusstemperatur (T(H)) erhöht, wenn die Katalysatoraufwärmsteuerung durchgeführt wird, und eine Katalysatorleistungsaufrechterhaltungszeitspanne (t(B)), während der die Katalysatortemperatur der Aufwärmabschlusstemperatur (T(H)) bei gestopptem Verbrennungsmotor (2) auf eine untere Grenztemperatur (T(L)) absinkt, bis zu der eine Abgasreinigungsleistung aufrechterhalten wird, und eine effiziente Katalysatoraufwärmzeitspanne (t(C)), die die Summe aus der Aufwärmabschlusszeitspanne (t(A)) und der Katalysatorleistungsaufrechterhaltungszeitspanne (t(B)) ist, berechnet,
wobei die Steuerungsvorrichtung **dadurch gekennzeichnet ist, dass** die Steuerungseinheit (10) verhindert, dass die Katalysatoraufwärmsteuerung durchgeführt wird, wenn eine andere Bedingung für das Umschalten in den EV-Modus festgestellt wird, wenn die berechnete Ankunftszeit (t(D)) gleich oder länger als die berechnete effiziente Katalysatoraufwärmzeitspanne (t(C)) ist.

2. Steuerungsvorrichtung nach Anspruch 1, wobei
die Steuerungseinheit (10) ermöglicht, dass die Katalysatoraufwärmsteuerung durchgeführt wird, wenn die andere Bedingung für das Umschalten in den EV-Modus festgestellt wird, wenn die berechnete Ankunftszeit (t(D)) kürzer als die berechnete effiziente Katalysatoraufwärmzeit (t(C)) ist.

3. Steuerungsvorrichtung nach Anspruch 2, wobei
die Steuerungseinheit (10), wenn sie die Katalysatoraufwärmsteuerung ermöglicht:
eine Nach-Verbrennungsmotorstopp-Katalysatorleistungsaufrechterhaltungszeitspanne schätzt, bis die Katalysatortemperatur auf die untere Grenztemperatur (T(L)) absinkt, nachdem der Verbrennungsmotor (2) gestoppt wurde; und
den Verbrennungsmotor (2) stoppt, wenn die berechnete Ankunftszeit (t(D)) kürzer ist als die geschätzte Nach-Verbrennungsmotorstopp-Katalysatorleistungsaufrechterhaltungszeitspanne.

4. Steuerungsvorrichtung nach einem der Ansprüche 1 bis 3, wobei die Steuerungseinheit (10) Folgendes berechnet:
eine Zeitspanne, während der sich eine Verbrennungsmotorkühlwassertemperatur des Verbrennungsmotors (2) auf einen ersten Schwellenwert erhöht, der der Aufwärmabschlusstemperatur (T(H)) entspricht, als die Aufwärmabschlusszeitspanne (t(A));
eine Zeitspanne, während der die Verbrennungsmotorkühlwassertemperatur des Verbrennungsmotors (2) auf einen zweiten Schwellenwert absinkt, der der unteren Grenztemperatur (T(L)) entspricht, als die Katalysatorleistungsaufrechterhaltungszeitspanne (t(B)); und
die Summe dieser berechneten Zeitspannen als die effiziente Katalysatoraufwärmzeit (t(C)),
wobei die Steuerungseinheit so konfiguriert ist, dass sie mithilfe dieser berechneten Zeitspannen basierend auf der Verbrennungsmotorkühlwassertemperatur bestimmt, ob die Katalysatoraufwärmsteuerung verhindert oder ermöglicht wird.

5. Steuerungsvorrichtung nach einem der Ansprüche 1 bis 4, wobei das Hybridfahrzeug (1) eine Navigationsvorrichtung (12) zum Berechnen der Fahrtroute beinhaltet und
die Erfassungseinheit (10) die Fahrtroute von der Navigationsvorrichtung (12) erfasst.

## Revendications

1. Dispositif de commande d'un véhicule hybride (1) avec un mode EV et un mode HEV,
le véhicule hybride (1) comprenant :
un moteur thermique (2) et un moteur électrique (3) comme sources d'entraînement ; et
un catalyseur (2A) pour purifier les gaz d'échappement en provenance du moteur thermique (2),
le mode EV permettant au véhicule hybride (1) de rouler, avec le moteur thermique arrêté, avec un couple de moteur électrique du moteur électrique (3),
le mode HEV permettant au véhicule hybride (1) de rouler avec un couple de moteur thermique du moteur thermique (2) et le couple de moteur électrique,
le dispositif de commande comprenant :
une unité d'acquisition (10) pour acquérir un itinéraire de déplacement d'un point actuel à un point de destination ; et
une unité de commande (10) pour effectuer une commande de montée en température du catalyseur, une commande de commutation et un calcul,
la commande de montée en température du catalyseur consistant à faire fonctionner le moteur thermique (2) pour augmenter la température du catalyseur,
la commande de commutation consistant à commuter entre le mode EV et le mode HEV selon les conditions associées basées sur un couple requis par le conducteur,
le calcul consistant à calculer un point de prédiction de départ sur l'itinéraire de déplacement acquis, auquel le moteur thermique (2) est prévu d'être démarré pour commuter vers le mode HEV, et une période de temps d'arrivée (t(D)) pendant laquelle le véhicule hybride (1) est prévu de se déplacer du point actuel au point de prédiction de départ,
dans lequel, tandis que le moteur thermique (2) fonctionne dans l'une des conditions de commutation vers le mode HEV, l'unité de commande (10) :
calcule une période de temps d'achèvement de montée en température (t(A)) pendant laquelle la température du catalyseur augmente jusqu'à une température d'achèvement de montée en température (T(H)) lorsque la commande de montée en température du catalyseur est effectuée, et une période de temps de maintien des performances du catalyseur (t(B)) pendant laquelle la température du catalyseur de la température d'achèvement de montée en température (T(H)) chute, avec le moteur thermique (2) arrêté, jusqu'à une température limite inférieure (T(L)) à laquelle les performances de purification des gaz d'échappement sont maintenues, et une période de temps efficace de montée en température du catalyseur (t(C)) qui correspond à la somme de la période d'achèvement de montée en température (t(A)) et de la période de maintien des performances du catalyseur (t(B)),
le dispositif de commande étant **caractérisé en ce que**
l'unité de commande (10) interdit d'effectuer la commande de montée en température du catalyseur si une autre condition de commutation vers le mode EV est établie lorsque la période d'arrivée calculée (t(D)) est supérieure ou égale à la période efficace de montée en température du catalyseur calculée (t(C)).

2. Dispositif de commande selon la revendication 1, dans lequel l'unité de commande (10) permet d'effectuer la commande de montée en température du catalyseur si l'autre condition de commutation vers le mode EV est établie lorsque la période d'arrivée calculée (t(D)) est inférieure à la période efficace de montée en température du catalyseur calculée (t(C)).

3. Dispositif de commande selon la revendication 2, dans lequel après autorisation de la commande de montée en température du catalyseur, l'unité de commande (10) :
estime une période de temps de maintien des performances du catalyseur après l'arrêt du moteur thermique jusqu'à ce que la température du catalyseur chute à la température limite inférieure (T(L)) après l'arrêt du moteur thermique (2) ; et
arrête le moteur thermique (2) si la période d'arrivée calculée (t(D)) est inférieure à la période de temps estimée de maintien des performances du catalyseur après l'arrêt du moteur thermique.

4. Dispositif de commande selon l'une quelconque des revendications 1 à 3, dans lequel
l'unité de commande (10) calcule :
une période de temps pendant laquelle la température de l'eau de refroidissement de moteur thermique du moteur thermique (2) augmente jusqu'à une première valeur de seuil qui correspond à la température d'achèvement de la montée en température (T(H)), comme la période d'achèvement de la montée en température (t(A)) ;
une période de temps pendant laquelle la température de l'eau de refroidissement de moteur thermique du moteur thermique (2) chute jusqu'à une seconde valeur de seuil qui correspond à la température limite inférieure (T(L)), comme la période de maintien des performances du catalyseur (t(B)) ; et
la somme de ces périodes calculées, comme la période efficace de montée en température du catalyseur (t(C)),
l'unité de commande étant configurée pour déterminer si la commande de montée en température du catalyseur est interdite ou autorisée, en utilisant ces périodes calculées en fonction de la température de l'eau de refroidissement de moteur thermique.

5. Dispositif de commande selon l'une quelconque des revendications 1 à 4, dans lequel
le véhicule hybride (1) comprend un dispositif de navigation (12) pour calculer l'itinéraire de déplacement, et
l'unité d'acquisition (10) acquiert l'itinéraire de déplacement à partir du dispositif de navigation (12).
